# EUROPÄISCHE PATENTANMELDUNG

(11) **EP 4 635 693 A1**
(43) Veröffentlichungstag der Anmeldung: **22.10.2025**
(21) Anmeldenummer: 24170356.0
(22) Anmeldetag: 15.04.2024
(51) Int. Cl.: B27C 1/00, B27G 13/08

(54) **ZERSPANUNGSWERKZEUG FÜR DIE ROTIERENDE SPANENDE BEARBEITUNG VON HOLZ**

(71) Anmelder: Leitz GmbH & Co. KG, 73447 Oberkochen (DE)
(72) Erfinder: Kisselbach, Andreas, 73431 Aalen (DE)
(74) Vertreter: Gramm, Lins & Partner Patent- und Rechtsanwälte PartGmbB

(57) **Zusammenfassung**

Die Erfindung betrifft ein Zerspanungswerkzeug (10) für die rotierende spanende Bearbeitung von Trockenholz, Holzwerkstoffen und Kunststoffen, mit einem Grundkörper (12), der zumindest eine Schneidplattenaufnahme hat, zumindest einer auswechselbaren Schneidplatte (18), die zumindest eine Schneide (22) hat, an der Schneidplattenaufnahme mittels eines Befestigungselements (20) befestigt ist und zum Schneiden in einer Schnittrichtung am Grundkörper (12) befestigt ist, und zumindest einem Spanraum (24) für die zumindest eine Schneide (22), wobei ein Verschleißschutzelement (26), das zumindest auf seiner in Schnittrichtung vorne liegenden Verschleißschutzelement-Frontseite (F) aus einem verschleißfesten Material aufgebaut ist, zwischen Schneidplatte (18) und Grundkörper (12) angeordnet ist und so angeordnet ist, dass ein Span (30) an der Schneide (22) und danach am Verschleißschutzelement (26) abläuft.

## Beschreibung

Die Erfindung betrifft ein Zerspanungswerkzeug für die, insbesondere rotierende, spanende Bearbeitung von Holz, insbesondere Trockenholz und/oder Palmholz und/oder Gummibaumholz, Holzwerkstoffen und Kunststoffen, insbesondere faserverstärkten Kunststoffen, beispielsweise glasfaserverstärkten Kunststoffen oder kohlenstofffaserverstärkten Kunststoffen, mit (a) einem Grundkörper, der zumindest eine Schneidplattenaufnahme hat, (b) einer auswechselbaren Schneidplatte, die zumindest eine Schneide hat, an der Schneidplattenaufnahme mittels eines Befestigungselements befestigt ist und zum Schneiden in einer Schnittrichtung am Grundkörper befestigt ist, und (c) zumindest einem Spanraum für die zumindest eine Schneide.

Die Erfindung betrifft zudem ein Verfahren zum, insbesondere rotierenden, spanenden Bearbeiten von Holz, insbesondere Trockenholz und/oder Palmholz und/oder Gummibaumholz, Holzwerkstoffen und Kunststoffen, insbesondere faserverstärkten Kunststoffen, beispielsweise glasfaserverstärkten Kunststoffen oder kohlenstofffaserverstärkten Kunststoffen.

Ein derartiges der Zerspanungswerkzeug ist aus der EP 3 031560 A1 bekannt Bei der Bearbeitung von Trockenholz, beispielsweise von Palmholz, werden häufig Umfangsfräser eingesetzt. Damit sich beim Einsatz von Umfangsfräsern eine hinreichend glatte, insbesondere streifenfreie, Oberfläche ergibt, müssen alle Schneidplatten in möglichst guter Näherung den gleichen Abstand von der Drehachse des Umfangsfräsers haben. Die Fertigung von solchen Umfangsfräsern ist daher anspruchsvoll.

Wünschenswert für solche Zerspanungswerkzeuge ist eine möglichst lange Lebensdauer.

Der Erfindung liegt die Aufgabe zugrunde, die Nachteile im Stand der Technik zu vermindern.

Die Erfindung löst das Problem durch ein gattungsgemäßes Zerspanungswerkzeug, dass ein Verschleißschutzelement aufweist, das (i) zumindest auf seiner in Schnittrichtung vorne liegenden Verschleißschutzelement-Frontseite aus einem verschleißfesten Material aufgebaut ist, (ii) zwischen Schneidplatte und Grundkörper angeordnet ist und (iii) so angeordnet ist, dass ein Span an der Schneide und danach am Verschleißschutzelement abläuft.

Gemäß einem zweiten Aspekt löst die Erfindung das Problem durch ein Verfahren zum Bearbeiten von Trockenholz, bei dem ein erfindungsgemäßes Zerspanungswerkzeug eingesetzt wird.

Vorteilhaft an der Erfindung ist, dass das Zerspanungswerkzeug als Ganzes eine hohe Lebensdauer hat. Insbesondere ist vorteilhaft, dass der Verschleiß des Grundkörpers deutlich vermindert ist. Bei Verschleiß der Schneidplatte kann diese daher oft ausgewechselt werden. Bei bekannten Zerspanungswerkzeugen kam es durch die abrasive Wirkung der Späne zu einem Verschleiß des Grundkörpers im Bereich der Befestigung der Schneidplatten. Um ein Ausbrechen der Schneidplatten aus dem Grundkörper zu verhindern, musste daher in vergleichsweise kurzen Abständen der Grundkörper verschrottet werden.

Vorteilhaft ist zudem, dass für den zusätzlichen Verschleißschutz in der Regel keine signifikante Erhöhung des Rundlauffehlers in Kauf genommen werden muss. Mit dem Zerspanungswerkzeug sind daher oft Oberflächen herstellbar, die keine sichtbaren Streifen aufweisen.

Vorteilhaft kann zudem sein, dass der Verschleiß, der sonst am Grundkörper auftritt, am Verschleißschutzelement konzentriert wird. Die Verschleißschutzelemente sind leicht austauschbar und zudem deutlich verschleißbeständiger als der Grundkörper. Insbesondere ist es entbehrlich, den Grundkörper aus gehärtetem Material herzustellen. Beispielsweise kann der Grundkörper aus Leichtmetall aufgebaut sein, insbesondere aus Aluminium. Leichtmetall besitzt eine geringe Verschleißfestigkeit, sodass bei herkömmlichen Zerspanungswerkzeugen der Vorteil der geringen rotierenden Masse gegen die kürzere Lebensdauer abgewogen werden muss.

Ein weiterer Vorteil der Erfindung ist, dass bestehende Werkzeuge in der Regel mit Verschleißschutzelementen nachrüstbar sind.

Im Rahmen der vorliegenden Beschreibung wird unter einem Zerspanungswerkzeug für die rotierende spanende Bearbeitung von Trockenholz, Holzwerkstoffen und Kunststoffen insbesondere ein Zerspanungswerkzeug verstanden, dass nicht nur theoretisch in der Lage ist, die genannten Materialien zu zerspanen, sondern dass zum Zerspanen dieser Materialien ausgebildet ist.

Unter dem Grundkörper wird insbesondere dasjenige Objekt verstanden, dass radial innen angeordnet ist und an dem die Schneidplatte befestigt und der Spanraum ausgebildet ist.

Unter dem Verschleißschutzelement wird insbesondere ein von den übrigen Bestandteilen des Zerspanungswerkzeug trennbares Element verstanden, das zumindest an seiner Frontseite aus einem verschleißfesten Verschleißschutzelement-Material aufgebaut. Unter einem verschleißfesten Verschleißschutzelement-Material wird insbesondere ein Material verstanden, das gegenüber dem Grundkörper-Material, aus dem der Grundkörper an seiner Oberfläche ausgebildet ist, gegenüber Abrasion durch Holzspäne (insbesondere Palmholz- oder Gummibaumspänen) zumindest fünffach, insbesondere zumindest zehnfach geringeren Verschleiß zeigt.

Unter Trockenholz wird nach DIN 4074-1 Holz verstanden, dessen Holzfeuchte höchstens 20% beträgt.

Vorzugsweise hat das Verschleißschutzelement-Material eine Härte von zumindest 650 HV10, insbesondere zumindest 650 HV10, insbesondere zumindest 700 HV10, insbesondere zumindest 800 HV10. Gemäß einer Ausführungsform ist das Verschleißschutzelement-Material Hartmetall.

Die Schneide hat vorzugsweise einen Keilwinkel nach DIN 6581 von zumindest 30°, insbesondere zumindest 40°, besonders bevorzugt zumindest 50°. Günstig ist ein Keilwinkel von höchstens 80°, insbesondere höchstens 75°, insbesondere höchstens 70°, insbesondere höchstens 60°.

Vorzugsweise beträgt ein Spanwinkel zumindest 0°, insbesondere zumindest 5°, insbesondere zumindest 10°, insbesondere zumindest 15°.

Gemäß einer Ausführungsform ist das Zerspanungswerkzeug ein Fräser, beispielsweise ein Umfangsfräser und/oder ein Stirnfräser. Im Folgenden wird exemplarisch ein Umfangsfräser beschrieben, ein Stirnfräser ist dabei stets mitgemeint, wobei ein dann statt eines radialen Abstands ein axialer Abstand gemeint ist.

Gemäß einer Ausführungsform beträgt ein Abstand zwischen Verschleißschutzelement und Schneidplatte höchstens 1 mm. Vorzugsweise schließt sich das Verschleißschutzelement in Spanflussrichtung an die Schneide an. Insbesondere liegt die Schneidplatte an dem Verschleißschutzelement an.

Vorzugsweise ist das Verschleißschutzelement lösbar am Grundkörper befestigt. Insbesondere ist das Verschleißschutzelement mittels eines Befestigungselements, beispielsweise einer Schraube, am Grundkörper befestigt. Besonders günstig ist es, wenn das Verschleißschutzelement mit demselben Befestigungselement wie die Schneidplatte am Grundkörper befestigt ist. Auf diese Weise ergibt sich ein einfach aufgebautes und dennoch robustes System, das einen geringen Rundlauffehler gestattet. Insbesondere sind das Verschleißschutzelement und die Schneidplatte mit genau einem Befestigungselement, insbesondere genau einer Schraube, befestigt.

Insbesondere besitzt das Verschleißschutzelement eine Bohrung, durch die das Befestigungselement hindurchgreift. Bevorzugt besitzt die Schneidplatte eine Bohrung, durch die das Befestigungselement hindurchgreift.

Gemäß einer Ausführungsform ist das Verschleißschutzelement so ausgebildet, dass die beim Zerspanen entstehenden Späne von einem Spanschutzbereich des Grundkörpers weggeleitet werden. Dazu wird der Frontseitenwinkel (Erläuterung dazu siehe unten) hinreichend groß gewählt.

Der Spanschutzbereich ist der Bereich des Grundkörpers, der an das Verschleißschutzelement angrenzt und sich in radial einwärtige Richtung über zumindest (bevorzugt genau) eine Verschleißschutzelement-Dicke, insbesondere (bevorzugt genau) zumindest ein Drittel, vorzugsweise zumindest (bevorzugt genau) der Hälfte, besonders bevorzugt zumindest (bevorzugt genau) zwei Drittel, insbesondere bevorzugt zumindest (bevorzugt genau) drei Viertel, insbesondere zumindest (bevorzugt genau) einer Befestigungselement-Länge des Befestigungselements, erstreckt.

Bevorzugt endet der Spanschutzbereich an einer radialen Position unterhalb eines Fußpunkts des Befestigungselements. Besonders günstig ist es, wenn der Spanschutzbereich unterhalb eines radialen Abstands eines Lochgrunds eines Lochs, beispielsweise einer Bohrung, zur Aufnahme des Befestigungselements endet. Der Fußpunkt des Befestigungselements ist der radial am weitesten innen liegende Punkt des Befestigungselements. In anderen Worten hat das Ende des Spanschutzbereichs den gleichen Abstand von der Drehachse des Zerspanungswerkzeugs wie der Fuß des Befestigungselements.

Das Verschleißschutzelement hat eine Verschleißschutzelement-Frontseite, die beim Zerspanen in Schnittrichtung vorne liegt. Die Verschleißschutzelement-Frontseite verläuft in der Werkzeug-Orthogonalebene unter einem Frontseitenwinkel ϕ zur Werkzeug-Bezugsebene. Wenn die Frontseite keine Ebene bildet, also z. B. konkav ausgebildet ist, wird der Frontseitenwinkel aus der Ausgleichsebene bestimmt. Die Werkzeug-Orthogonalebene ist ein Querschnitt, der senkrecht zur Werkzeug-Drehachse des Zerspanungswerkzeugs verläuft. Die Werkzeug-Bezugsebene enthält die Schneidenkante und steht senkrecht auf dem Vektor der Schnittgeschwindigkeit. Die Benennung der Werkzeugebenen und Winkel orientiert sich an der DIN 6581 - Bezugssysteme und Winkel am Schneidteil des Werkzeugs.

Beim Umfangsfräser ist die Werkzeug-Bezugsebene in Schnittrichtung eine Ebene durch die Werkzeug-Drehachse, in der die Werkzeug-Drehachse liegt und die durch die in Schnittrichtung vorderste Kante der Schneide verläuft.

Der Frontseitenwinkel ϕ ist vorzugsweise größer als ein Spanschutzbereichswinkel σ, unter dem eine Ausgleichsgerade durch den Spanschutzbereich verläuft, minus 5° (also ϕ > σ - 5°), insbesondere größer als der Spanschutzbereichswinkel (also ϕ > σ). Beispielsweise beträgt der Frontseitenwinkel zumindest 0°, insbesondere zumindest 5°.

Der Frontseitenwinkel ist vorzugsweise kleiner als der Spanwinkel der Schneidplatte, insbesondere zumindest um 10°, bevorzugt um zumindest 20°, besonders bevorzugt um zumindest 30°, besonders bevorzugt um zumindest 35°, kleiner als der Spanwinkel.

Vorzugsweise steht die Verschleißschutzelement-Frontseite an ihrer der Schneidplatte abgewandten Seite in Umfangsrichtung über den an das Verschleißschutzelement anschließenden Bereich des Grundkörpers über. In anderen Worten existiert ein Rücksprung zwischen der Verschleißschutzelement-Frontseite und dem Grundkörper, insbesondere der sich nach radial innen anschließenden Spanraumwandung des Grundkörpers.

Insbesondere ist die Verschleißschutzelement-Frontseite von der sich nach radial innen anschließenden Spanraumwandung weggerichtet. Das Verschleißschutzelement steht damit vorzugsweise über die sich nach radial innen anschließende Spanraumwandung dachartig über.

Insbesondere ist die Verschleißschutzelement-Frontseite so geneigt, dass der Span nicht im Bereich einer Gewindebohrung der Schraube zum Befestigen des Verschleißschutzelements und/oder der Schneide auf die Spanraumwandung trifft.

Gemäß einer Ausführungsform hat das Verschleißschutzelement eine ebene Grundkörper-Anlagefläche, mit der es in Kontakt mit dem Grundkörper steht, und eine ebene Schneidplatten-Anlagefläche, mit der es in Kontakt mit der Schneidplatte steht. Gemäß einer Ausführungsform verlaufen die Grundkörper-Anlagefläche und die Schneidplatten-Anlagefläche parallel. Hierunter wird insbesondere verstanden, dass die Ausgleichsebenen jeweils durch die Grundkörper-Anlagefläche und die Schneidplatten-Anlagefläche eine Parallelitätsabweichung von max. 2°, insbesondere maximal 1°, vorzugsweise maximal 0,5°, besonders bevorzugt maximal 0.025°, haben.

Gemäß einer Ausführungsform ist das Zerspanungswerkzeug ein Umfangsfräser und besitzt eine Vielzahl umfangseitig angeordneter Schneidplatten. Vorzugsweise hat jedes Verschleißschutzelement eine Verschleißschutzelement-Dicke, wobei sich die Verschleißschutzelement-Dicken der Verschleißschutzelement des Fräsers um höchstens 0,05 mm, insbesondere höchstens 0,02 mm, besonders bevorzugt höchstens 0,01 mm, voneinander unterscheiden. Diese geringen Abweichungen der Verschleißschutzelement-Dicken untereinander können dadurch erreicht werden, dass die Verschleißschutzelement plangeschliffen werden.

Bei herkömmlichen Zerspanungswerkzeugen wird der Abstand der Schneiden von der Drehachse des Zerspanungswerkzeugs nur durch die Formabweichungen des Grundkörpers und der Schneidplatten bestimmt. Durch die zusätzlich vorhandenen Verschleißschutzelemente steigt die Formabweichung des Gesamtsystems aus Grundkörper, Verschleißschutzelement und Schneidplatte, infolge der sich addierenden Toleranzen, weshalb zusätzliche Elemente zwischen den Schneidplatten und dem Grundkörper grundsätzlich unerwünscht sind. Dadurch, dass die Verschleißschutzelemente durch Planschleifen hergestellt werden können, entstehen jedoch nur sehr geringe zusätzliche Formabweichungen des Gesamtsystems. Der dadurch entstehende kleine Nachteil wird durch den Vorteil des deutlich geringeren Verschleißes des Grundkörpers überkompensiert.

Gemäß einer Ausführungsform liegt die Schneidplatte ausschließlich auf dem Verschleißschutzelement auf. In anderen Worten hat das Verschleißschutzelement mit seiner radial einwärts gewandten (breiten) Seite ausschließlich Kontakt mit dem Verschleißschutzelement und insbesondere nicht mit anderen Teilen des Grundkörpers. An einer Seitenfläche besteht vorzugsweise Kontakt mit dem Grundkörper. Auf diese Weise ergibt sich eine besonders geringe Abweichung zwischen einem Soll-Abstand der Schneide von der Drehachse des Zerspanungswerkzeug und dem tatsächlichen Abstand.

Gemäß einer Ausführungsform verläuft eine Verschleißschutzelement-Vorderkante zumindest im Wesentlichen parallel zu der jeweiligen Schneide. Hierunter wird insbesondere verstanden, dass eine maximale Abweichung zu einer idealen Parallelität höchstens 1 mm, vorzugsweise höchstens 0,5 mm, beträgt.

Günstig ist es, wenn das Verschleißschutzelement zwei aufeinander zu verlaufende Seitenflächen hat, die in eine Verrundung münden. In anderen Worten ist das Verschleißschutzelement im Wesentlichen dreieckförmig und besitzt eine verrundete Ecke. Ein solches Verschleißschutzelement lässt sich besonders gut mit geringer Positionsabweichung am Grundkörper montieren. Die Vertiefung für das Verschleißschutzelement im Grundkörper lässt sich zudem meist gut durch Fräsen realisieren.

Gemäß einer Ausführungsform besitzt das Zerspanungswerkzeug zumindest 2, insbesondere zumindest 3, in Umfangsrichtung hintereinander angeordnete Schneidplatten. Günstig ist es, wenn ein maximaler radialer Höhenunterschied der in Umfangsrichtung hintereinander angeordneten Schneiden höchstens 0,075 mm, insbesondere höchstens 0,050 mm, besonders bevorzugt 0,040 mm, beträgt. Ein derartiger geringer maximaler radialer Höhenunterschied führt zu einer Oberfläche des bearbeiteten Werkstücks mit besonders geringer periodischer Formabweichung.

Gemäß einer Ausführungsform sind die Schneidplatten in zumindest zwei axial beabstandeten Schneidenreihen angeordnet. Auf diese Weise lässt sich die Schnittbreite erweitern und so die Produktivität des Zerspanungswerkzeug steigern.

Günstig ist es, wenn ein maximaler Reihen-Höhenunterschied zwischen zwei benachbarten Reihen höchstens 0,075 mm, insbesondere ≤ 0,050 mm, beträgt. Der Reihen-Höhenunterschied ist die Differenz zwischen zwei Hüll-Radien von Hüllkreisen, deren Mittelpunkte jeweils die Drehachse des Zerspanungswerkzeugs sind. Der Hüllkreis ist der Kreis minimalen Durchmessers, der keine Schneidplatte schneidet und dessen Mittelpunkt die Drehachse des Zerspanungswerkzeug ist. Auf diese Weise entstehen bearbeitete Werkstückoberflächen, die keine sichtbaren Bearbeitungsmarken haben.

Gemäß einer Ausführungsform steht die obere Verschleißschutzelement-Vorderkante der Verschleißschutzelement-Frontseite seitlich über die Schneide der Schneidplatte über. Hierunter ist zu verstehen, dass eine Projektion der Verschleißschutzelement-Vorderkante auf die Schneide der Schneidplatte über die Schneide übersteht. Vorzugsweise steht die Verschleißschutzelement-Vorderkante beiderseitig um zumindest 0,5 mm, insbesondere zumindest 1 mm, und/oder höchstens 5 mm, insbesondere höchstens 4 mm, über die Schneide der Schneidplatte über. Das schützt den Grundkörper besonders effektiv gegen Verschleiß.

Im Folgenden wird die Erfindung anhand der beigefügten Zeichnungen näher erläutert. Dabei zeigt
- Figur 1a: eine perspektivische Ansicht eines erfindungsgemäßen Zerspanungswerkzeugs,
- Figur 1b: ein Ausschnitt eines Schnitts durch die Werkzeug-Orthogonalebene des Zerspanungswerkzeugs gemäß Figur 1a,
- Figur 2a: perspektivische Ansicht eines Teils benachbarter Schneidenreihen des Zerspanungswerkzeugs gemäß Figur 1a mit einer Explosionszeichnung für die Befestigung eines Verschleißschutzelements und einer Schneidplatte
- Figur 2b: die Ansicht gemäß Figur 2a mit einem montierten Verschleißschutzelement und einer Schneidplatte,
- Figur 3a: eine perspektivische Ansicht schräg von der Seite auf ein erfindungsgemäßes Zerspanungswerkzeug,
- Figur 3b: den Spanfluss des Zerspanungswerkzeugs gemäß Figur 3a und
- Figur 3c: einen Ausschnitt aus Figur 1b.

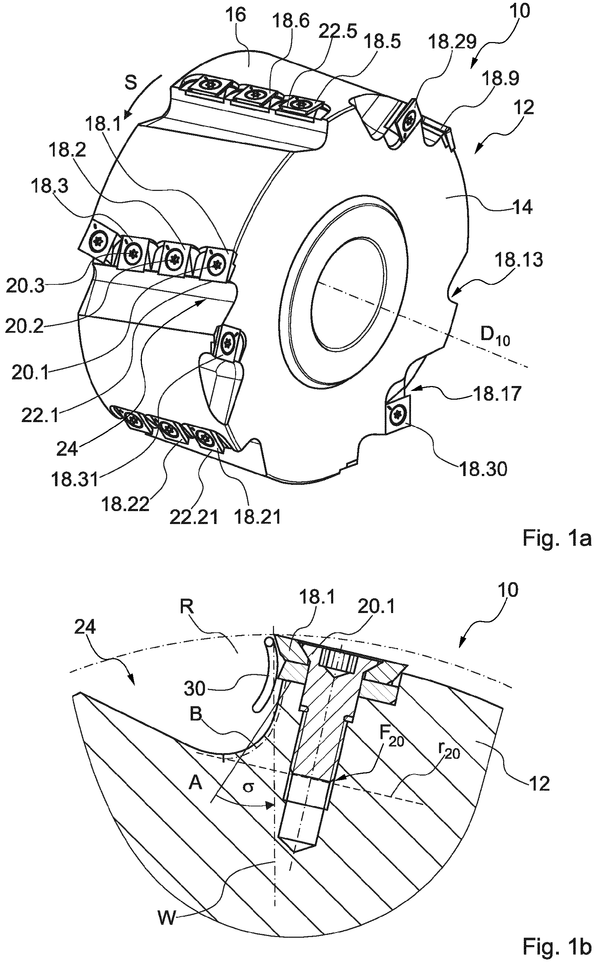

Figur 1a zeigt ein erfindungsgemäßes Zerspanungswerkzeug 10 mit einem Grundkörper 12, der eine Stirnfläche 14 und eine Umfangsfläche 16 besitzt. An der Umfangsfläche 16 sind mehrere Schneidplatten 18.i (i = 1, 2, ...) mit einem jeweiligen Befestigungselement 20.i befestigt. In einer Schnittrichtung S vor und unterhalb von Schneiden 22.i der Schneidplatten 18.i befindet sich ein Spanraum 24. Der Spanraum 24 ist eine Vertiefung im Grundkörper 12 zur Aufnahme der bei der Bearbeitung entstehenden Späne Figur 1b zeigt, dass zwischen dem Grundkörper 12 und der Schneidplatte 18 (in Figur 1 b ist die Schneidplatte 18.1 gezeigt) ein Verschleißschutzelement 26.i (in Figur 1 b ist i = 1) angeordnet ist. Die Schneidplatte 18.1 und das Verschleißschutzelement 26.1 sind gemeinsam mittels des Befestigungselements 20.1, im vorliegenden Fall in Form einer Schraube befestigt.

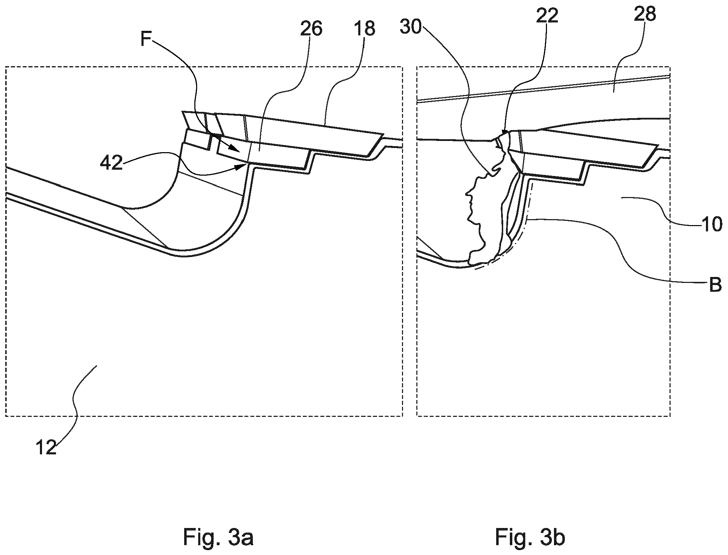

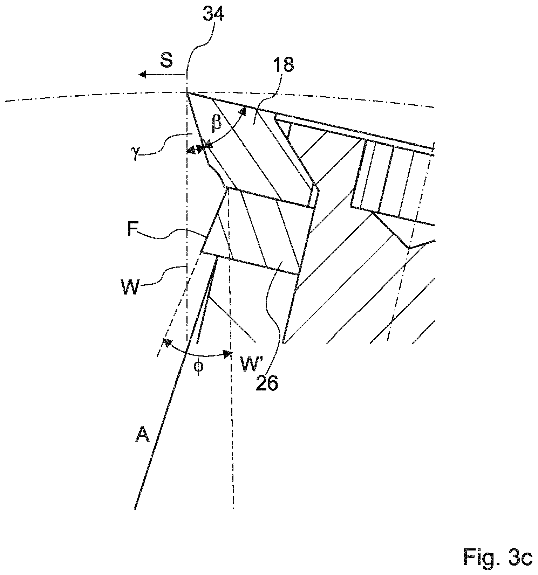

Beim Zerspanen eines Werkstücks 28 (vergleiche Figur 3 b) entsteht ein Span 30, der in Figur 1b schematisch eingezeichnet ist, und in Spanflussrichtung R abfließt. Das Verschleißschutzelement 26.i ist so angeordnet, dass der Span 30 von einem Spanschutzbereich B (mit Strichpunktlinie eingezeichnet) des Grundkörpers 12 weggeleitet wird. Der Spanschutzbereich B ist der Bereich des Spanraums 24 im Querschnitt senkrecht zu einer Drehachse D₁₀ (vergleiche Figur 1a), der am Verschleißschutzelement 46.1 beginnt und in radial einwärtiger Richtung an einer radialen Position r₂₀ eines Fußpunkts F₂₀ des Befestigungselements endet. Auf diese Weise verursacht der Span 30 im Wesentlichen keinen Verschleiß in einem Bereich, der die Festigkeit und die Funktion des Befestigungselements 20.1 beeinträchtigen würde.

Figur 1b zeigt zudem eine Ausgleichsgerade A durch den Spanschutzbereich B. Die Ausgleichsgerade A verläuft unter einem Spanschutzbereichswinkel σ zur Werkzeug-Bezugsebene W. Figur 3c zeigt, dass der Frontseitenwinkel ϕ größer als Spanschutzbereichswinkel σ minus 5° sein kann. Es gilt also σ > ϕ -5°.

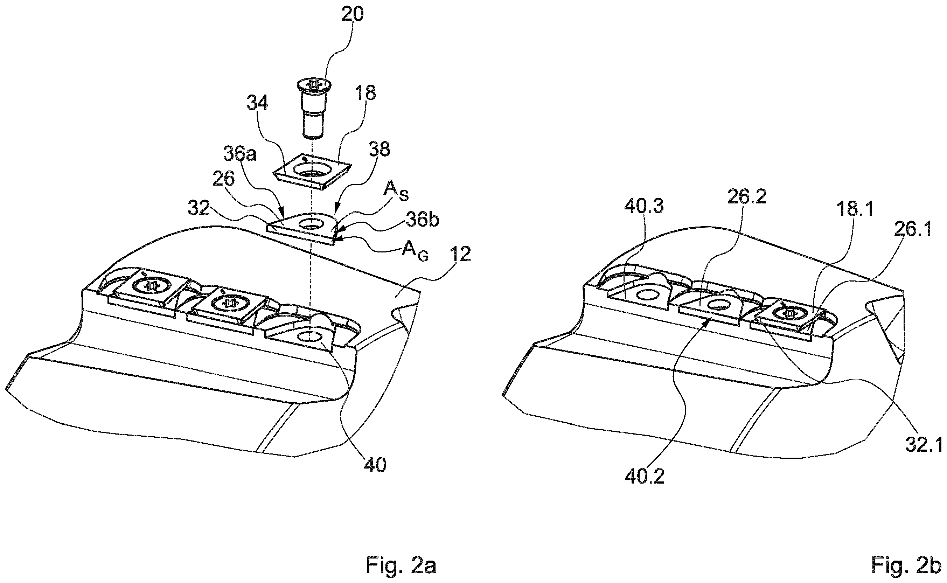

Figur 2a zeigt, dass das Verschleißschutzelement 26 (Bezugszeichen ohne Zählsuffix bezeichnen alle entsprechenden Objekte) eine ebene Grundkörper-Anlagefläche A_{G} und eine Schneidplatten-Anlagefläche As besitzt. Mit der Grundkörper-Anlagefläche A_{G} liegt das Verschleißschutzelement 26 am Grundkörper 12 an. An der Schneidplatten-Anlagefläche As liegt die Schneidplatte 18 an.

Eine Verschleißschutzelement-Vorderkante 32 verläuft zunächst im Wesentlichen parallel zu einer entsprechenden Schneide 34 der Schneidplatte 18. Das Verschleißschutzelement 26 hat zwei aufeinander zu verlaufende Seitenflächen 36a, 36b, die in eine Verrundung 38 münden. Dadurch ist das Verschleißschutzelement 26 im Wesentlichen dreieckförmig und besitzt eine verrundete Ecke, nämlich die Verrundung 38. Das Verschleißschutzelement 26 ist in einer Einsenkung 40 aufgenommen, deren Kontur der Kontur des Verschleißschutzelements 26 entspricht.

Figur 2b zeigt das zusammen mit der Schneidplatte 18.1 montierte Verschleißschutzelement 26.1, dass in seiner Einsenkung 40.2 eingesetzte Verschleißschutzelement 26.2 sowie die Einsenkung 40.3.

Die Verschleißschutzelement-Vorderkante 32.1 des Verschleißschutzelements 26.1 steht seitlich über die Schneide 22 über.

Figur 3a zeigt eine perspektivische Teil-Ansicht auf die Schneidplatte 18, das Verschleißschutzelement 26 und den Grundkörper 12. Es ist zu erkennen, dass zwischen einer Verschleißschutzelement-Frontseite F und dem Grundkörper 12 ein Rücksprung 42 gebildet ist. In anderen Worten steht das Verschleißschutzelement 26 dachartig über den Grundkörper 12 über.

Figur 3b zeigt das Zerspanungswerkzeug 10 beim Zerspanen des Werkstücks 28.die Schneide 22 trägt den Span 30 ab, der sich radial einwärts und weg vom Spanschutzbereich B bewegt.

Figur 3c zeigt den Keilwinkel β, der vorzugsweise im Intervall [30°, 80°] liegt. Der Spanwinkel γ liegt vorzugsweise im Intervall γ e [0°...40°]. Im vorliegenden Fall gilt γ = 15°. Der Spanwinkel γ wird zur Werkzeug-Bezugsebene W gemessen.

Die Verschleißschutzelement-Frontseite verläuft unter einem Frontseitenwinkel ϕ zur Werkzeug-Bezugsebene W. Der Frontseitenwinkel ϕ wird gemessen zu einer zur Werkzeug-Bezugsebene W parallelen Ebene W`, die durch den radial äußersten Punkt der Verschleißschutzelement-Frontseite F verläuft.

Vorzugsweise (und unabhängig von anderen Merkmalen der gezeigten Ausführungsform) beträgt eine Differenz zwischen Frontseitenwinkel ϕ und Spanschutzbereichswinkel σ betragsmäßig höchstens 15°, insbesondere höchstens 10°.

In der vorliegenden Ausführungsform kann das Verschleißschutzelement 26 aus Hartmetall, beispielsweise aus Wolframcarbid-Kobalt-Hartmetall, oder Keramik oder Cermet aufgebaut sein.

Figur 1 zeigt, dass mehrere Schneidplatten 18.1, 18.5, 18.9, 18.13 (von Grundkörper 12 verdeckt), 18.17 (von Grundkörper 12 verdeckt) und 18.21 in Umfangsrichtung hintereinander angeordnet sind. Die jeweiligen Schneiden 22 haben einen maximalen Höhenunterschied, der sich berechnet als Differenz zwischen dem größten radialen Abstand und dem kleinsten radialen Abstand der Schneiden von der Drehachse D₁₀.

Die Schneidplatten sind zudem in zumindest zwei beabstandeten Schneidenreihen angeordnet. Die erste Schneidenreihe ist gebildet durch die Schneidplatten 18.1, 18.5, 18.9, 18.13, 18.17 und 18.21. Die zweite Schneidenreihe ist gebildet durch die Schneidplatten 18.2, 18.6, 18.22 sowie18.10, 18.14, 18.18, die jeweils nicht verdeckt sind.

Figur 1a zeigt zudem, dass das Zerspanungswerkzeug 10 an der Stirnfläche 14 angeordnete Schneidplatten 18.29, 18.30 und 18.31 aufweist. Diese sind wie die übrigen Schneidplatten befestigt.

Die Schneiden einer Schneidenreihe sind in axialer Richtung so gegeneinander versetzt, dass sich eine glatte Oberfläche auf dem Werkstück ergibt.

### Bezugszeichenliste

| | | | |
|---|---|---|---|
| 10 | Zerspanungswerkzeug | R | Spanflussrichtung |
| 12 | Grundkörper | W | Werkzeug-Bezugsebene |
| 14 | Stirnfläche | W' | parallele Ebene zur Werkzeug- |
| 16 | Umfangsfläche | | Bezugsebene W |
| 18 | Schneidplatte | | |
| 20 | Befestigungselement | | |
| 22 | Schneide | | |
| 24 | Spanraum | | |
| 26 | Verschleißschutzelement | | |
| 28 | Werkstück | | |
| 30 | Span | | |
| 32 | Verschleißschutzelement-Vorderkante | | |
| 34 | Schneide | | |
| 36a | Seitenfläche | | |
| 36b | Seitenfläche | | |
| 38 | Verrundung | | |
| 40 | Einsenkung | | |
| 42 | Rücksprung | | |
| β | Keilwinkel | | |
| γ | Spanwinkel | | |
| ϕ | Frontseitenwinkel | | |
| σ | Spanschutzbereichswinkel | | |
| A_{G} | Grundkörper-Anlagefläche | | |
| As | Schneidplatten-Anlagefläche | | |
| B | Spanschutzbereich | | |
| D₁₀ | Drehachse | | |
| F | Verschleißschutzelement-Frontseite | | |
| S | Schnittrichtung | | |

## Patentansprüche

1. Zerspanungswerkzeug (10) für die rotierende spanende Bearbeitung von Trockenholz, Holzwerkstoffen und Kunststoffen, mit
(a) einem Grundkörper (12), der
zumindest eine Schneidplattenaufnahme hat,
(b) zumindest einer auswechselbaren Schneidplatte (18), die
(i) zumindest eine Schneide (22) hat,
(ii) an der Schneidplattenaufnahme mittels eines Befestigungselements (20) befestigt ist und
(iii) zum Schneiden in einer Schnittrichtung am Grundkörper (12) befestigt ist, und
(c) zumindest einem Spanraum (24) für die zumindest eine Schneide (22), **gekennzeichnet durch**
(d) ein Verschleißschutzelement (26), das
(i) zumindest auf seiner in Schnittrichtung vorne liegenden Verschleißschutzelement-Frontseite (F) aus einem verschleißfesten Material aufgebaut ist,
(ii) zwischen Schneidplatte (18) und Grundkörper (12) angeordnet ist und
(iii) so angeordnet ist, dass ein Span (30) an der Schneide (22) und danach am Verschleißschutzelement (26) abläuft.

2. Zerspanungswerkzeug (10) nach Anspruch 1, **dadurch gekennzeichnet, dass** das Verschleißschutzelement (26)
(a) sich in Spanflussrichtung (R) an die Schneide (22) anschließt,
(b) lösbar am Grundkörper (12) befestigt ist,
(c) mit demselben Befestigungselement (20) am Grundkörper (12) befestigt ist wie die Schneidplatte (18) und
(d) so ausgebildet ist, dass es die beim Zerspanen entstehenden Späne von einem Spanschutzbereich (B) des Grundkörpers (12) wegleitet, der an das Verschleißschutzelement (26) angrenzt und sich in radial einwärtiger Richtung über zumindest eine Verschleißschutzelement-Dicke, insbesondere zumindest ein Drittel einer Befestigungselement-Länge des Befestigungselements (20), erstreckt.

3. Zerspanungswerkzeug (10) nach einem der vorstehenden Ansprüche, **dadurch gekennzeichnet, dass**
(a) die Verschleißschutzelement-Frontseite (F) bezüglich der Werkzeug-Orthogonalebene unter einem Frontseitenwinkel (ϕ) zu einer zur Werkzeug-Bezugsebene (W) parallelen Ebene (W') verläuft,
(b) wobei der Frontseitenwinkel (ϕ) größer ist als ein Spanschutzbereichswinkel σ, unter dem eine Ausgleichsgerade durch den Spanschutzbereich verläuft, minus 5°.

4. Zerspanungswerkzeug (10) nach einem der vorstehenden Ansprüche, **gekennzeichnet durch**
einen Rücksprung (42) zwischen der Verschleißschutzelement-Frontseite (F) und dem Grundkörper (12).

5. Zerspanungswerkzeug (10) nach einem der vorstehenden Ansprüche, **dadurch gekennzeichnet, dass**
(a) das Verschleißschutzelement (26)
eine ebene Grundkörper-Anlagefläche (A_{G}), mit der es in Kontakt mit dem Grundkörper (12) steht, und
eine ebene Schneidplatten-Anlagefläche (As), mit der es in Kontakt mit der Schneidplatte (18) steht, aufweist, und
(b) die Grundkörper-Anlagefläche (A_{G}) und die Schneidplatten-Anlagefläche (As) parallel verlaufen.

6. Zerspanungswerkzeug (10) nach einem der vorstehenden Ansprüche, **dadurch gekennzeichnet, dass**
(a) es ein Fräser ist und eine Vielzahl umfangseitig angeordneter Schneidplatten (18) aufweist und
(b) jedes Verschleißschutzelement (26) eine Verschleißschutzelement-Dicke hat und sich die Verschleißschutzelement-Dicken um höchstens 0,05 mm, insbesondere höchstens 0,02 mm, besonders bevorzugt höchstens 0,01 mm unterscheiden.

7. Zerspanungswerkzeug (10) nach einem der vorstehenden Ansprüche, **dadurch gekennzeichnet, dass**
(a) eine Verschleißschutzelement-Vorderkante (32) zumindest im Wesentlichen parallel zu der jeweiligen Schneide (22) verläuft,
(b) das Verschleißschutzelement (26) im Wesentlichen dreieckförmig ausgebildet ist und an seiner der Frontseite gegenüberliegende Ecke gerundet ist.

8. Zerspanungswerkzeug (10) nach einem der vorstehenden Ansprüche, **gekennzeichnet durch**
(a) zumindest zwei, insbesondere zumindest drei, in Umfangsrichtung hintereinander angeordnete Schneidplatten (18),
(b) wobei ein maximaler radialer Höhenunterschied der Schneiden (22) höchstens 0,075 mm, insbesondere ≤ 0,050 mm, beträgt.

9. Zerspanungswerkzeug (10) nach einem der vorstehenden Ansprüche, **dadurch gekennzeichnet, dass**
(a) die Schneidplatten (18) in zumindest zwei axial beabstandeten Schneidenreihen angeordnet sind und
(b) wobei ein maximaler Reihen-Höhenunterschied zwischen zwei benachbarten Reihen höchstens 0,075 mm, insbesondere ≤ 0,050 mm, beträgt.

10. Verfahren zum Bearbeiten von Holz, insbesondere Trockenholz, Palmholz, Gummibaumholz oder Holzwerkstoffen oder faserverstärkten Kunststoffen, bei dem ein Zerspanungswerkzeug (10) nach einem der vorstehenden Ansprüche eingesetzt wird.
